# EUROPÄISCHE PATENTSCHRIFT

(11) **EP 4 623 520 B1**
(45) Veröffentlichungstag und Bekanntmachung des Hinweises auf die Patenterteilung: **02.12.2026**
(21) Anmeldenummer: 23840703.5
(22) Anmeldetag: 22.12.2023
(51) Int. Cl.: H04B 7/04, H04B 7/06

(54) **DRAHTLOSES KOMMUNIKATIONSSYSTEM**
WIRELESS COMMUNICATION SYSTEM
SYSTÈME DE COMMUNICATION SANS FIL

(30) Priorität: 12.01.2023 EP 23151414
(43) Veröffentlichungstag der Anmeldung: 01.10.2025
(73) Patentinhaber: Siemens Aktiengesellschaft, 80333 München (DE)
(72) Erfinder: MAYER, Lukas Walter, 1190 Wien (AT); GILA, Janos, 2340 Mödling (AT); HOFMANN, Andreas, 1140 Wien (AT); SCHIEFER, Martin, 3100 St. Pölten (AT)
(74) Vertreter: Siemens Patent Attorneys
(86) Internationale Anmeldenummer: PCT/EP2023/087687
(87) Internationale Veröffentlichungsnummer: WO 2024/149610

(56) Entgegenhaltungen:
- WO-A1-2022/193059
- WO-A1-2022/257067
- WO-A1-2022/268332
- WO-A1-2022/269072

## Beschreibung

Die Erfindung betrifft ein drahtloses Kommunikationssystem.

Elektronisch steuerbare Reflektoren können vielfältig eingesetzt werden, beispielsweise um eine Signalausleuchtung von einem Sender an durch Hindernisse oder Objekte abgeschatteten Orten zu verbessern.

Dies kann beispielsweise in einer Industriehalle erfolgen, um die Empfangseigenschaften individueller Arbeitsbereiche mit dort eingesetzten Funk-Systemen, wie nach dem 5G-Standard, mithilfe eines jeweiligen elektronisch steuerbaren Reflektors zu verbessern, und eine Funk-Verbindung zu schaffen, welche über keine direkte Kommunikation zwischen Sender und Empfänger, also einer abgedeckten Verbindung (engl. "non-line of sight") verfügen

Ein elektronisch intelligent steuerbarer Reflektor kann sowohl in einem Reflexions-Winkel räumlich individuell, nämlich ein einem horizontalen Winkel Phi, als auch in einem vertikalen Winkel Theta voneinander getrennt und adaptiv verändert werden.

Damit können die Reflexionseigenschaften des Reflektors über einen gesamten Arbeitsbereich eingestellt werden.

Jedoch sind die möglichen Winkeleinstellungen für die Winkel Phi und Theta eher eng begrenzt, was die Anwendung eines intelligent und elektronisch steuerbaren Reflektors einschränkt.

Ferner kann die verfügbare Feldstärke des Empfangssignals nicht ausreichen, um einen guten Empfang sicherzustellen und eine zuverlässige Decodierung durchzuführen.

In den Veröffentlichungen WO 2022/193059 A1, WO 2022/268332 A1, WO 2022/257067 A1 und WO 2022/269072 A1 sind in allgemeiner Weise rekonfigurierbare intelligente Reflektoren gezeigt, welche für eine bidirektionale Kommunikationsverbindung eingesetzt werden.

Es ist Aufgabe der Erfindung eine Anordnung eines drahtlosen Kommunikationssystems zu schaffen, welches einen verbesserten Anwendungsbereich erlaubt und auch eine höhere Systemverfügbarkeit bereitstellt.

Die Aufgabe wird durch ein drahtloses Kommunikationssystem gelöst, umfassend einen Sender, einen Empfänger und einen ersten elektronisch steuerbaren Reflektor an einem ersten Ort und zumindest einen zweiten elektronisch steuerbaren Reflektor an zumindest einem zweiten Ort, wobei der Sender dazu eingerichtet ist, ein jeweiliges Signal in Richtung des ersten Reflektors und des zumindest einen zweiten Reflektors zu senden, und der erste und der zumindest eine zweite Reflektor dazu eingerichtet sind, das jeweilige Signal zu empfangen und in Richtung des Empfängers zu reflektieren, wobei der erste und der zumindest eine zweite Reflektor ferner dazu eingerichtet sind, das jeweilige Signal innerhalb eines Winkel-Bereichs von einer jeweiligen ersten Grenze zu einer jeweiligen zweiten Grenze mit jeweils winkelabhängigen Reflexions-Faktoren zu reflektieren, wobei der jeweilige Signalpfad des jeweilig reflektierten Signals, zwischen dem Reflektor und einem Ankunftsort des reflektierten Signals, an der jeweiligen ersten Grenze eine jeweilige erste Länge aufweist, und der jeweilige Signalpfad des jeweilig reflektierten Signals an der jeweiligen zweiten Grenze eine jeweilige zweite Länge aufweist, und der jeweilige Signalpfad des jeweilig reflektierten Signals in der jeweiligen Mitte zwischen der jeweiligen ersten und der jeweiligen zweiten Grenze eine jeweilige mittlere Länge aufweist, und eine jeweilige relative Längendifferenz zwischen der jeweiligen ersten Länge und der jeweiligen zweiten Länge zumindest 20% beträgt, und der erste und der zumindest eine zweite Reflektor gemeinsam dazu eingerichtet sind, den jeweiligen winkelabhängigen Reflexions-Faktor an der jeweiligen ersten Grenze gegenüber der jeweiligen mittleren Länge zu vergrößern und den jeweiligen winkelabhängigen Reflexions-Faktor an der jeweiligen zweiten Grenze zu verringern.

Unter "jeweiligen" Längen, jeweiligen Signalpfaden, jeweiligen reflektierten Signalen, jeweiligen Grenzen, jeweiligen Winkel-Bereichen ist im vorliegenden Zusammenhang zu verstehen, dass für jeden steuerbaren Reflektor ein eigener Signalpfad mit den beschriebenen physikalischen, elektrischen und geometrischen Eigenschaften vorliegt, die für jeden Reflektor im System analog zueinander definiert sind.

Wenn mehrere steuerbare Reflektoren an mehreren Orten montiert sind und dementsprechend betrieben werden, welche dazu eingerichtet sind, dieselbe Fläche auszuleuchten, an welcher der Empfänger angeordnet ist, so kann eine erhöhte Feldstärke für den Empfänger bereitgestellt werden und dadurch die Systemverfügbarkeit verbessert werden.

Es handelt sich bei der Anordnung nicht um eine reine Aneinanderreihung von mehreren Reflektoren, denn die genannte Konfiguration der Reflektoren erlaubt darüber hinaus eine entsprechend kombinierte, gemeinsam Konfiguration.

Eine derartige gemeinsame Konfiguration kann in einer Konfigurations-Vorrichtung erfolgen, welche ferner vom Kommunikationssystem umfasst ist, und dazu eingerichtet ist, den ersten und den zumindest einen zweiten Reflektor entsprechend ansteuert.

Das reflektierte Signal beleuchtet somit einen Ankunftsort, der durch eine Fläche - wie dem Boden, auf welchem der Empfänger angeordnet ist - gebildet sein kann.

Der Ankunftsort des reflektierten Signals kann auch durch andere Objekte gebildet sein, die eine Wand oder andere Hindernisse.

Dazu wird die Geometrie der Anordnung, beispielsweise in einem Raum, erfasst und in eine entsprechende Verteilung der Reflexions-Eigenschaften der steuerbaren Reflektor-Elemente der Reflektoren mithilfe geometrischer Operationen umgerechnet.

Der erste und der zumindest eine zweite Reflektor weisen jeweils steuerbare Reflektor-Elemente mit jeweilig einstellbaren Reflexions-Faktoren auf. Durch eine entsprechende Ansteuerung der angeordneten Reflektor-Elemente können die Reflexions-Eigenschaften des Reflektors beispielsweise winkelabhängig eingestellt werden, welche mithilfe einer Antennen-/ Reflektor-Apertur darstellbar ist.

Die relative Längendifferenz kann beispielsweise auf die erste oder zweite Länge bezogen werden, oder optional auch auf die Länge des kürzesten, direkten Übertragungspfades vom Reflektor zum Empfänger.

In einer Weiterbildung der Erfindung ist es vorgesehen, dass die jeweilige relative Längendifferenz zumindest 30% und bevorzugt zumindest 50% beträgt.

In einer Weiterbildung der Erfindung ist es vorgesehen, dass das System in einem Raum angeordnet ist.

In einer Weiterbildung der Erfindung ist es vorgesehen, dass eine jeweilig gedachte Sichtlinie mit einer jeweilige Sichtlinien-Länge zwischen dem Sender und dem Empfänger gebildet ist, und eine Übertragungsstrecke zwischen dem Sender, dem steuerbaren Reflektor und dem Empfänger gebildet ist, und ein jeweilig gedachtes Dreieck aus einer jeweiligen ersten Teil-Länge der Übertragungsstrecke, welche zwischen dem Sender und dem Reflektor gelegen ist, einer jeweiligen zweiten Teil-Länge der Übertragungsstrecke, welche zwischen dem Reflektor und dem Empfänger gelegen ist, und der jeweiligen Sichtlinien-Länge einen jeweiligen stumpfen Winkel am Empfänger aufweist.

Die Aufgabe wird auch durch ein System eingangs genannter Art gelöst, wobei der erste und der zumindest eine zweite Reflektor ferner dazu eingerichtet sind, das jeweilige Signal innerhalb eines Winkel-Bereichs von einer jeweiligen ersten Grenze zu einer jeweiligen zweiten Grenze mit jeweiligen winkelabhängigen Reflexions-Faktoren zu reflektieren, wobei der jeweilige Signalpfad des jeweilig reflektierten Signals an der jeweiligen ersten Grenze eine jeweilige erste Länge aufweist, und der jeweilige Signalpfad des jeweiligen reflektierten Signals an der jeweiligen zweiten Grenze eine jeweilige zweite Länge aufweist, und der jeweilige Signalpfad des jeweilig reflektierten Signals in der jeweiligen Mitte zwischen der jeweiligen ersten und der jeweiligen zweiten Grenze eine jeweilige mittlere Länge aufweist, und eine jeweilige gedachte Sichtlinie mit einer jeweiligen Sichtlinien-Länge zwischen dem Sender und dem Empfänger gebildet ist, und ein jeweilig gedachtes Dreieck aus der jeweiligen ersten Länge, der jeweiligen zweiten Länge und der jeweiligen Sichtlinien-Länge einen jeweiligen stumpfen Winkel am Empfänger aufweist, und der erste und der zumindest eine zweite Reflektor dazu eingerichtet sind, den jeweiligen winkelabhängigen Reflexions-Faktor an der jeweiligen ersten Grenze gegenüber der jeweiligen mittleren Länge zu vergrößern und den jeweiligen winkelabhängigen Reflexions-Faktor an der jeweiligen zweiten Grenze zu verringern.

Die Erfindung wird nachfolgend anhand eines in den beigeschlossenen Zeichnungen dargestellten Ausführungsbeispiels näher erläutert.

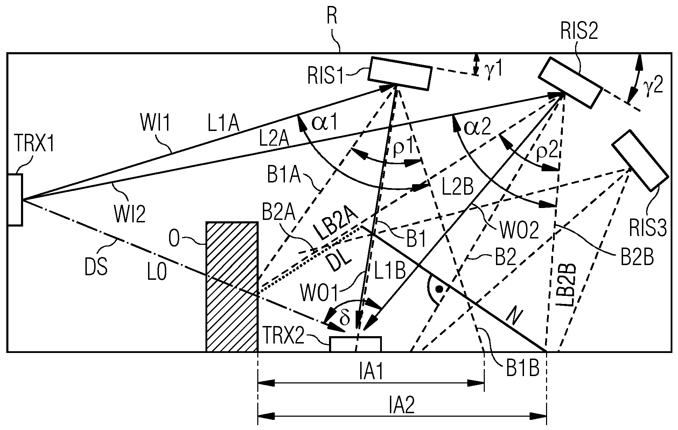

Die Figur zeigt ein erstes Ausführungsbeispiel der Erfindung.

Zunächst ist ein drahtloses Kommunikationssystem nach dem Stand der Technik gezeigt, welches einen Sender TRX1, einen Empfänger TRX2 und einen elektronisch steuerbaren Reflektor RIS1 umfasst.

Ein Signal WI1 kann vom Sender TRX1 zu einem Reflektor RIS1 gesendet werden und weiter als Signal WO1 zu einem Empfänger TRX2 reflektiert werden, wobei das Signal Längen L1A und L1B zurücklegt.

Der Reflektor weist einen steuerbaren Bereich ρ1 auf.

Durch die Anordnung von Sender TRX1, Reflektor RIS1 und Empfänger TRX2 wird gemeinsam mit einem Montagewinkel γ1 des Reflektors ein effektiver Winkelbereich α1 für den Reflektor RIS1 gebildet.

Der Empfänger TRX2 kann innerhalb einer ausgeleuchteten Fläche IA1 angeordnet sein, in welcher mithilfe des Reflektors RIS1 ein Empfang des vom Sender TRX1 gesendeten Signals erfolgen kann.

Es ist ferner ein erfindungsgemäßes drahtloses Kommunikationssystem gezeigt, welches einen Sender TRX1, einen Empfänger TRX2 und einen elektronisch steuerbaren Reflektor RIS2 umfasst und in einem Raum R angeordnet ist.

Der Sender TRX1 ist dazu eingerichtet, ein Signal WI2 in Richtung des Reflektors RIS2 zu senden.

Der intelligente, elektronisch steuerbare Reflektor RIS2 ist dazu eingerichtet, das Signal vom Sender TRX1 zu empfangen und weiter als Signal WO2 in Richtung des Empfängers TRX2 zu reflektieren.

Der Signalpfad B1 des reflektierten Signals in der Mitte zwischen der ersten und der zweiten Grenze B1A, B1B des ersten Reflektors RIS1 weist eine mittlere Länge auf.

Der Reflektor RIS2 weist einen steuerbaren Bereich ρ2 auf, welcher dem steuerbaren Bereich ρ1 des Reflektors RIS1 entsprechen kann.

Durch die Anordnung von Sender TRX1, Reflektor RIS2 und Empfänger TRX2 wird gemeinsam mit einem Montagewinkel γ2 des Reflektors, gemessen gegenüber der Horizontalen des Raums R, ein effektiver Winkelbereich α2 für den Reflektor RIS2 gebildet.

Es ist in der Figur erkennbar, dass der effektive Winkelbereich α2 für den Reflektor RIS2 deutlich über dem effektiven Winkelbereich α1 für den Reflektor RIS1 liegt.

Daher ist die ausgeleuchtete Fläche IA2 durch den Reflektor RIS2 größer als die ausgeleuchtete Fläche IA1 durch den Reflektor RIS1.

Es ist klar, dass eine Übertragung auch in umgekehrter Richtung erfolgen kann, wenn bei Sender und Empfänger jeweilige Transceiver-Funktionen vorliegen.

Der Reflektor RIS2 ist ferner dazu eingerichtet, das Signal innerhalb eines Winkel-Bereichs von einer ersten Grenze B2A zu einer zweiten Grenze B2B mit winkelabhängigen Reflexions-Faktoren zu reflektieren.

Der Signalpfad des reflektierten Signals an der ersten Grenze B2A weist eine erste Länge LB2A auf.

Der Signalpfad des reflektierten Signals an der zweiten Grenze B2B weist eine zweite Länge LB2B auf.

Der Signalpfad des jeweilig reflektierten Signals liegt zwischen dem Reflektor RIS2 und einem Ankunftsort des reflektierten Signals.

Der Signalpfad B2 des reflektierten Signals in der Mitte zwischen der ersten und der zweiten Grenze B2A, B2B des zweiten Reflektors RIS2 weist eine mittlere Länge auf.

Eine relative Längendifferenz DL zwischen der ersten Länge LB2A und der zweiten Länge LB2B beträgt zumindest 20%, optional zumindest 30% und bevorzugt zumindest 50%.

Die relative Längendifferenz DL kann beispielsweise auf die erste oder zweite Länge LB2A, LB2B bezogen werden, oder optional auch auf die Länge L2B.

Die relative Längendifferenz DL kann beispielsweise gebildet werden, indem eine Normale N auf den Signalpfad B2 des reflektierten Signals in der Mitte zwischen der ersten und der zweiten Grenze B2A, B2B gelegt wird, wobei die Normale N durch den Schnittpunkt der zweiten Grenze B2B und jener Ebene verläuft, welche durch den Empfänger TRX2 gebildet wird, wie der Boden des Raums R.

Jener Anteil auf der Grenze B2A, welcher zwischen dem Schnittpunkt der ersten Grenze B2A und der Normalen N festgelegt wird, sowie jener Ebene, welche durch den Empfänger TRX2 gebildet wird, wie der Boden des Raums R, oder auch durch einen Schnittpunkt mit einem Hindernis-Objekt O, kann als relative Längendifferenz DL festgelegt werden.

Der Reflektor RIS2 ist außerdem dazu eingerichtet, den Reflexions-Faktor winkelabhängig an der ersten Grenze B2A gegenüber der mittleren Länge LB2 zu vergrößern und den Reflexions-Faktor winkelabhängig an der zweiten Grenze B2A zu verringern.

Alternativ oder zusätzlich kann eine gedachte Sichtlinie DS mit einer Länge der Sichtlinien L0 zwischen dem Sender TRX1 und dem Empfänger TRX2 gebildet sein.

Der Signalpfad des jeweilig reflektierten Signals ist zwischen dem Reflektor RIS2 und einem Ankunftsort des reflektierten Signals gebildet.

Ferner kann ein gedachtes Dreieck aus einer ersten Teil-Länge L2A, einer zweiten Teil-Länge L2B und der Sichtlinien-Länge L0 einen stumpfen Winkel δ am Empfänger TRX2 aufweisen.

Die ersten Teil-Länge L2A der Übertragungsstrecke ist zwischen dem Sender TRX1 und dem Reflektor RIS2 gelegen.

Eine zweite Teil-Länge L2B der Übertragungsstrecke ist zwischen dem Reflektor RIS2 und dem Empfänger TRX2 gelegen.

Der Empfänger TRX2 kann innerhalb einer ausgeleuchteten Fläche IA2 angeordnet sein, in welcher mithilfe des Reflektors RIS2 ein Empfang des vom Sender TRX1 gesendeten Signals erfolgen kann.

Dieselben Betrachtungen gelten für einen weiteren, zweiten steuerbaren Reflektor RIS3, welcher an einem anderen Ort im Raum R montiert ist und dementsprechend betrieben wird, und welcher ferner dazu eingerichtet ist, dieselbe Fläche IA2 auszuleuchten, um eine erhöhte Feldstärke für den Empfänger TRX2 bereitzustellen und dadurch die Systemverfügbarkeit zu verbessern.

Die Konfiguration der Reflektoren RIS2, RIS3 erfolgt kombiniert, also gemeinsam.

Eine derartige gemeinsame Konfiguration kann in einer Konfigurations-Vorrichtung mit einem Prozessor und einem Speicher erfolgen (ist in der Figur nicht gezeigt), welche den ersten und den zumindest einen zweiten Reflektor entsprechend ansteuert.

Dazu kann die Geometrie der Anordnung im Raum R erfasst werden und in eine entsprechende Verteilung der Reflexions-Eigenschaften für die steuerbaren Reflektor-Elemente der Reflektoren RIS2, RIS3 mithilfe mathematischer, geometrischer Operationen umgerechnet werden.

Sind die Positionen des Senders TRX1, der Reflektoren RIS2, RIS3 und des Empfängers TRX2 - bezogen auf die Wellenlänge der Kommunikationsfrequenz des Übertragungssystems - nicht ausreichend genau bekannt, so kann die Konfiguration von der Reflektoren RIS2, RIS3 beispielsweise durch ein Optimierungsverfahren unterstützt werden, welches die Empfangsleistung an am Empfänger TRX2 maximiert.

### Bezugszeichenliste:

- γ1, γ2: Montagewinkel des intelligenten Reflektors
- ρ1, ρ2: steuerbarer Bereich des intelligenten Reflektors
- B1, B2: Bereichs-Mitte des steuerbaren Bereichs des intelligenten Reflektors
- B1A, B1B, B2A, B2B: Länge an der Begrenzung des steuerbaren Bereichs des intelligenten Reflektors
- DL: relative Längen-Differenz
- DS: gedachte Sichtlinie durch Hindernis
- IA1, IA2: ausgeleuchtete Fläche
- L1A, L1B, L2A, L2B: Teil-Länge der Übertragungsstrecke
- LB2A, LB2B: kürzeste, direkte Länge der Übertragungsstrecke
- N: Normale auf Bereichs-Mitte
- O: Hindernis-Objekt
- R: Raum
- RIS1-RIS3: intelligenter, steuerbarer Reflektor
- TRX1, TRX2: Transceiver
- WI1, WI2: eingehende Welle
- WO1, WO2: ausgehende Welle
- α1, α2: effektiver Winkelbereich des intelligenten Reflektors
- δ: stumpfer Winkel

## Patentansprüche

1. Drahtloses Kommunikationssystem, umfassend einen Sender (TRX1), einen Empfänger (TRX2) und einen ersten elektronisch steuerbaren Reflektor (RIS2) an einem ersten Ort und zumindest einen zweiten elektronisch steuerbaren Reflektor (RIS3) an zumindest einem zweiten Ort, wobei der Sender (TRX1) dazu eingerichtet ist, ein jeweiliges Signal in Richtung des ersten Reflektors (RIS2) und des zumindest einen zweiten Reflektors (RIS3) zu senden, und der erste und der zumindest eine zweite Reflektor (RIS2, RIS3) dazu eingerichtet sind, das jeweilige Signal zu empfangen und in Richtung des Empfängers (TRX2) zu reflektieren, **dadurch gekennzeichnet, dass** der erste und der zumindest eine zweite Reflektor (RIS2, RIS3) ferner dazu eingerichtet sind, das jeweilige Signal innerhalb eines Winkel-Bereichs von einer jeweiligen ersten Grenze (B2A) zu einer jeweiligen zweiten Grenze (B2B) mit jeweils winkelabhängigen Reflexions-Faktoren zu reflektieren, wobei der jeweilige Signalpfad des jeweilig reflektierten Signals, zwischen dem Reflektor (RIS2) und einem Ankunftsort des reflektierten Signals, an der jeweiligen ersten Grenze (B2A) eine jeweilige erste Länge (LB2A) aufweist, und der jeweilige Signalpfad des jeweilig reflektierten Signals an der jeweiligen zweiten Grenze (B2B) eine jeweilige zweite Länge (LB2B) aufweist, und der jeweilige Signalpfad des jeweilig reflektierten Signals in der jeweilige Mitte zwischen der jeweiligen ersten und der jeweiligen zweiten Grenze (B2A, B2B) eine jeweilige mittlere Länge (LB2) aufweist, und eine jeweilige relative Längendifferenz (DL) zwischen der jeweiligen ersten Länge (LB2A) und der jeweiligen zweiten Länge (LB2B) zumindest 20% beträgt, und der erste und der zumindest eine zweite Reflektor (RIS2, RIS3) gemeinsam dazu eingerichtet sind, den jeweiligen winkelabhängigen Reflexions-Faktor an der jeweiligen ersten Grenze (B2A) gegenüber der jeweiligen mittleren Länge (LB2) zu vergrößern und den jeweiligen winkelabhängigen Reflexions-Faktor an der jeweiligen zweiten Grenze (B2B) zu verringern.

2. System nach dem vorhergehenden Anspruch, wobei die jeweilige relative Längendifferenz (DL) zumindest 30% und bevorzugt zumindest 50% beträgt.

3. System nach einem der vorhergehenden Ansprüche, wobei das System in einem Raum (R) angeordnet ist.

4. System nach einem der vorhergehenden Ansprüche, wobei eine jeweilig gedachte Sichtlinie (DS) mit einer jeweilige Sichtlinien-Länge (L0) zwischen dem Sender (TRX1) und dem Empfänger (TRX2) gebildet ist, und eine Übertragungsstrecke zwischen dem Sender (TRX1), dem steuerbaren Reflektor (RIS2) und dem Empfänger (TRX2) gebildet ist, und ein jeweilig gedachtes Dreieck aus einer jeweiligen ersten Teil-Länge (L2A) der Übertragungsstrecke, welche zwischen dem Sender (TRX1) und dem Reflektor (RIS2) gelegen ist, einer jeweiligen zweiten Teil-Länge (L2B) der Übertragungsstrecke, welche zwischen dem Reflektor (RIS2) und dem Empfänger (TRX2) gelegen ist, und der jeweiligen Sichtlinien-Länge (L0) einen jeweiligen stumpfen Winkel (δ) am Empfänger (TRX2) aufweist.

## Claims

1. Wireless communication system, comprising a transmitter (TRX1), a receiver (TRX2) and a first electronically controllable reflector (RIS2) at a first location and at least one second electronically controllable reflector (RIS3) at at least one second location, wherein the transmitter (TRX1) is configured to transmit a respective signal in the direction of the first reflector (RIS2) and the at least one second reflector (RIS3), and the first and the at least one second reflector (RIS2, RIS3) are configured to receive the respective signal and to reflect it in the direction of the receiver (TRX2), **characterised in that** the first and the at least one second reflector (RIS2, RIS3) are furthermore configured to reflect the respective signal within an angular range from a respective first limit (B2A) to a respective second limit (B2B) with angle-dependent reflection factors in each case, wherein the respective signal path of the respectively reflected signal, between the reflector (RIS2) and an arrival location of the reflected signal, has a respective first length (LB2A) at the respective first limit (B2A), and the respective signal path of the respectively reflected signal has a respective second length (LB2B) at the respective second limit (B2B) and the respective signal path of the respectively reflected signal has a respective middle length (LB2) in the respective centre between the respective first and the respective second limit (B2A, B2B), and a respective relative length difference (DL) between the respective first length (LB2A) and the respective second length (LB2B) is at least 20%, and the first and the at least one second reflector (RIS2, RIS3) are jointly configured to increase the respective angle-dependent reflection factor at the respective first limit (B2A) in relation to the respective middle length (LB2) and to reduce the respective angle-dependent reflection factor at the respective second limit (B2B).

2. System according to the preceding claim, wherein the respective relative length difference (DL) is at least 30% and preferably at least 50%.

3. System according to one of the preceding claims, wherein the system is arranged in a space (R).

4. System according to one of the preceding claims, wherein a respectively imaginary sight line (DS) with a respective sight line length (L0) is formed between the transmitter (TRX1) and the receiver (TRX2), and a transmission route is formed between the transmitter (TRX1), the controllable reflector (RIS2) and the receiver (TRX2), and a respectively imaginary triangle made of a respective first part length (L2A) of the transmission route, which is located between the transmitter (TRX1) and the reflector (TRX2), a respective second part length (L2B) of the transmission route, which is located between the reflector (RIS2) and the receiver (TRX2), and the respective sight line length (L0) has a respective obtuse angle (δ) at the receiver (TRX2).

## Revendications

1. Système de communication sans fil, comprenant un émetteur (TRX1), un récepteur (TRX2) et un premier réflecteur contrôlable électroniquement (RIS2) au niveau d'un premier emplacement et au moins un deuxième réflecteur contrôlable électroniquement (RIS3) au moins au niveau d'un deuxième emplacement, l'émetteur (TRX1) étant agencé pour envoyer un signal respectif en direction du premier réflecteur (RIS2) et de l'au moins un deuxième réflecteur (RIS3), et le premier et l'au moins un deuxième réflecteur (RIS2, RIS3) sont agencés pour recevoir le signal respectif et le réfléchir en direction du récepteur (TRX2), **caractérisé en ce que** le premier et l'au moins un deuxième réflecteur (RIS2, RIS3) sont en outre agencés pour réfléchir le signal respectif dans une plage d'angles allant d'une première limite (B2A) respective à une deuxième limite (B2B) respective avec des facteurs de réflexion dépendants chacun de l'angle, le trajet de signal respectif du signal réfléchi respectif, entre le réflecteur (RIS2) et un emplacement d'arrivée du signal réfléchi, ayant une première longueur (LB2A) respective au niveau de la première limite (B2A), et le trajet de signal respectif du signal réfléchi respectif ayant une deuxième longueur (LB2B) respective au niveau de la deuxième limite (B2B) respective, et le trajet de signal respectif du signal réfléchi respectif ayant une longueur moyenne (LB2) respective au milieu respectif entre la première respective et la deuxième limite respective (B2A, B2B), et une différence de longueur relative (DL) respective entre la première longueur (LB2A) respective et la deuxième longueur (LB2B) respective est d'au moins 20 %, et le premier et l'au moins un deuxième réflecteur (RIS2, RIS3) sont agencés conjointement pour augmenter le facteur de réflexion dépendant de l'angle respectif au niveau de la première limite (B2A) respective par rapport à la longueur moyenne (LB2) respective et pour réduire le facteur de réflexion dépendant de l'angle respectif au niveau de la deuxième limite (B2B) respective.

2. Système selon la revendication précédente, dans lequel la différence de longueur relative (DL) respective est d'au moins 30 % et de préférence d'au moins 50 %.

3. Système selon l'une des revendications précédentes, dans lequel le système est disposé dans un espace (R).

4. Système selon l'une des revendications précédentes, dans lequel une ligne de vue imaginaire (DS) respective avec une longueur de ligne de vue (L0) respective est formée entre l'émetteur (TRX1) et le récepteur (TRX2), et un trajet de transmission est formé entre l'émetteur (TRX1), le réflecteur contrôlable (RIS2) et le récepteur (TRX2), et un triangle imaginaire respectif, constitué à partir d'une première longueur partielle (L2A) respective du trajet de transmission situé entre l'émetteur (TRX1) et le réflecteur (RIS2), d'une deuxième longueur partielle (L2B) respective du trajet de transmission situé entre le réflecteur (RIS2) et le récepteur (TRX2), et de la longueur de ligne de vue (L0) respective, présente un angle obtus (δ) respectif au niveau du récepteur (TRX2).
